# EUROPEAN PATENT APPLICATION

(11) **EP 1 936 908 A1**
(43) Date of publication of application: **25.06.2008**
(21) Application number: 06126543.5
(22) Date of filing: 19.12.2006
(51) Int. Cl.: H04L 29/06

(54) **Method, apparatus and data container for transferring high resolution audio/video data in a high speed IP network**

(71) Applicant: Deutsche Thomson OHG, 30625 Hannover (DE)
(72) Inventor: Köhler, Ralf, 30455 Hannover (DE)
(74) Representative: Schäferjohann, Volker

(57) **Abstract**

In video production sites, video material is stored on video servers in digital form. High speed networks are available for transferring video content from the video servers to workstations for post-processing like video editing, colour management etc. Most networks and a lot of software for post-processing is available for exchanging data with Internet protocol. With high definition video it is more complicated to use IP protocols for video transport in networks due to the much higher bandwidth needs.

The invention enables that high definition videos can be transported in real time transport packets that are commonly used for video streaming. The whole RTP packet format is defined and a corresponding header extension for the RTP packet header is disclosed. Furthermore, the invention concerns the idea of transporting associated audio data and metadata inside the video data, which comes in the format of DPX frames.

## Description

The invention relates to a proposal how to transfer high resolution audio/video data efficiently in an IP network. For this purpose it is defined how to embed the high resolution video/audio data efficiently in RTP packets. New formats for RTP packets are defined. For efficiently transporting the audio/video stream, the Digital Moving-Picture Exchange (DPX) format is utilized.

### Background of the Invention

High speed networks are more and more available not only in video production sites, such as film or TV studios, but also in wide area distribution networks. Prominent examples are 10G Ethernet or Infiniband. The requirements for such a network are e.g. but not exhaustive:
- Packetized Transport
- Low Latency
- Synchronisation Information like Audio - Video Time Stamps included
- Multiplexing of Video and related Audio Content
- Robustness Against Errors - Bit Errors shall not be visible to Upper Layers
- Easy Support by Hardware Building Blocks
- Support of Metadata (e.g. Time, Audio, Video, Camera Parameters)

Software for post processing and video editing usually have already an IP protocol stack implemented for networking and these stacks are widely available and can be more easily adapted for the studio needs. Accordingly, there is a high demand from the studios to use IP protocol for video / audio streaming.

In studios, professional video networking means that the video content is transferred uncompressed. For HD quality, in 2k (2048 * 1080 pixels) resolution a video stream with a net data rate of 1.91 Gbit/s is resulting. Even higher data rates are resulting for 4k resolution (4096 * 2160 pixels). For HDTV formats 1080i/720p data rates from 200 to 250 Mbit/s are resulting in studio environment (uncompressed). This shows, what high speed networking means in this case.

### Invention

It is an object of the invention to provide for a solution how to transport professional audio/video content over high speed networks using IP protocol.

Different audio/video containers are available for professional video production.

One is the Digital Moving Picture Exchange File Format (DPX). This format is standardized in SMPTE 268M. Characteristics of the format are:
- Frame based
- no explicit Audio Support
- basic Metadata Support per Frame.
   Another format is the Material Exchange Format (MXF), which is standardized in SMPTE 377M. This format has the characteristics:
- Stream based
- can cover multiple Components, e.g. Audio and Video.

More sophisticated formats are the General Exchange Format (GXF) standardized in SMPTE 360M and the Advanced Authoring Format (AAF).

The invention resides in a method for transferring high resolution audio/video data in a high speed IP network as claimed in claims 1 to 8. The invention also concerns an apparatus for performing the method as claimed.

It is one idea of the invention to use the DPX format for networking. The internal usage of the DPX format simplifies the receiver side of a transmission line. All metadata is included in the DPX frame, including the filename. So the need to transmit additional metadata through an outbound channel is minimized. If the audio option is used, the synchronized playback of video and audio is simplified, too. This is because with the reception of every video frame the associated audio is received at the same time and with the same effort, buffering and sync display efforts are minimal. Because DPX supports a lot of video formats, this file format also supports a range of standard- and high-definition video formats, including common television formats such as ITU BT.601, and standards from the Society of Motion Picture and Television Engineers (SMPTE), such as SMPTE 274M and SMPTE 296M.

Another idea of the invention concerns a packetization scheme for encapsulating video frames or associated audio data into a payload format for the Real-Time Transport Protocol, RTP. RTP is part of the IP protocol stack and is tailor made for transporting multi media data streams (audio, video, text, etc.). It is a packet-oriented protocol and normally it is operated in conjunction with the User Datagram Protocol (UDP) from the IP stack. A number of RTP packet formats are already specified for diverse video formats. These include BT.656 video, DV video, SMPTE 292M video, 12-Bit DAT audio, 20- and 24-Bit linear sampled audio, PCM audio.

No explicit RTP packet format is available for the DPX video. The invention makes use of the possibility to add a header extension to the RTP packet header for transporting DPX frames. The header extension concerns a payload header, that extends the standard RTP sequence number and the standard RTP time stamp. This has the advantage that the more frames can be sent without sequence number wrap around and thus the problems with misinterpretation of the sequence number due to multiple wrap around in the stream are avoided in particular when operating at high data rates. The correct order of packets can be reconstructed with greater reliability. The accuracy of synchronization is improved by extending the time stamp field.

In addition, a further time code field is added to the extra header big enough to carry an SMPTE time code. This time code identifies each video frame from the start of the video stream.

There are a number of flags inserted in the extra header, which indicate basic characteristics of the frame, such as frame begin, frame end, and time code type.

A further field is included in the extra header in which an offset value can be placed identifying where the first payload data is found in the RTP packet relative to the first Byte of the current DPX frame. This is an important information in case the DPX frames are transported in fragments for reconstructing the frame at the receiving end.

The invention further resides in a data container for as claimed in claims 10 to 17.

### Drawings

Embodiments of the invention are depicted in the drawings and will be explained hereinafter. The drawings show in:
- Fig. 1: an example of a professional network in the studio environment;
- Fig. 2: an example of an IP protocol stack;
- Fig. 3: the conventional RTP packet format;
- Fig. 4: an RTP packet format according the invention for encapsulating DPX frames;
- Fig. 5: the format of an extension according the invention for field 76 of a DPX frame allowing to transport associated audio data or metadata;
- Fig. 6: the format of an additional metadata field that is used to transmit a high resolution time stamp value;
- Fig. 7: an RTP packet format according the invention for encapsulating standalone audio data;
- Fig. 8: an example of an AIFF audio payload field for the RTP packet shown in Fig. 6, and;
- Fig. 9: an example of a BWF audio payload field for the RTP packet shown in Fig. 6.

### Detailed Description of the Invention

Thinking about professional video production in studios, this is a field where non-linear video editing needs to be performed as well as other tasks like colour correction. This is done with workstations based on high-end personal computers and corresponding software, today. As Ethernet technology is the de facto standard in the field of computer networks, it is not surprising that there is a demand from the studios to also build their networks for post production based on Ethernet network technology. If uncompressed video data needs to be transported from a professional video camera to a data recorder, there is a very high band width needed on the network for doing the job. For example, the HD Video format 1920 x 1080i with a frame rate of 24 frames per second and 10 bit colour resolution for the RGB colours, requires a data rate of 1.6 Gbit/s for transferring the uncompressed video stream. Including audio data and to be conform with even higher video formats like 2K or 4K, the network technology should be ready to deal with much higher band width demands. Therefore, in one scenario the studios rely on the already existing 10Gbit Ethernet network technology. This network technology is based on two optical fibres one for each direction. The wave length of the light transporting the data is between 1269 and 1356 nm.

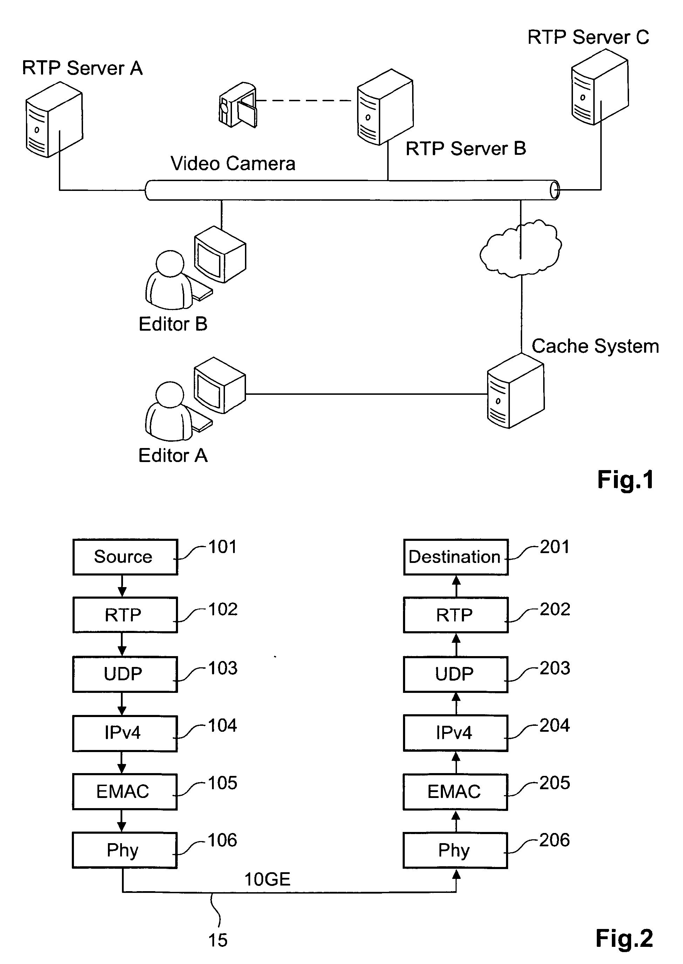

Fig 1 shows an example of a studio network. Three RTP Servers A, B, C are depicted which serve for recording audio and video content. The network for transporting data streams is based on 10 Gigabit Ethernet technology. One video camera is shown that can be connected to an RTP server for copying the data on the recording medium to the server. Two video editing places are shown, one inside the studio network and the other remote from the studio and connected via a large distribution network.

From Internet technology various protocols exist for transporting real-time data streams. In case of transferring uncompressed data streams for HDTV video production, the reliable TCP protocol cannot be used. Instead of that, it is the IP/UDP/RTP protocol stack, shown in Fig. 2 that is available for this purpose. Hereby, IP stands for the IPv4 or IPv6 Internet Protocol. UDP stands for the well known User Datagram Protocol and RTP stands for the Real-Time Transport Protocol. This protocol stack consists of unsecured protocol layers. All the services from the TCP protocol like acknowledging receipt of data packets and repeating of lost data packets is not implemented in the UDP/RTP protocols and in worst case the limited bandwidth would not be sufficient for it. As the order of transmission of packets can also be affected when transporting the packets over the LAN, the RTP protocol layer provides sequence numbering and time stamping.

Fig. 2 shows the data flow in the classical RTP/UDP/IP protocol stack of a source device 10 as well as the corresponding IP/UDP/RTP protocol stack of a destination device 20. Application software in the source device 10 is denoted with reference number 101. This application delivers video data recorded by a video camera to the transport layer in the device. With reference number 102 the RTP protocol implementation is denoted. The UDP protocol 103 follows directly below the RTP protocol layer. Below the UDP protocol there is the IP protocol IPv4 denoted with reference number 104 depicted. Ahead of the IP packet header, an Ethernet MAC header is also added to the IP packet. This is done in the Ethernet MAC layer 105. The completed Ethernet packet is transported over the 10Gbit Ethernet line by means of the corresponding physical layer which is denoted with reference number 106.

In the destination device the data flow is vice versa. The Ethernet packet is received by the physical layer 206 in the destination device. An Ethernet MAC packet is evaluated in Ethernet MAC layer 205. From the IP packet an embedded UDP packet is extracted in the IPv4 layer 204. The UDP packet is delivered to the UDP protocol layer 203. The payload data of the UDP packet concerns an RTP packet and is forwarded to the RTP protocol layer 202 in the destination device 20. Finally, the payload data of the RTP packet, this is the video data in uncompressed form, is delivered to the application software 201 in the destination device 20. As a further reference for the purpose of the disclosure of the invention it is referred to the request for command RFC768, wherein the UDP protocol is specified.

Furthermore, it is referred to RFC791, in which the IPv4 protocol is specified. For the Ethernet network technology, the two layers 106 and 105 respectively 206 and 205 need to be implemented in each of the devices. With regard to the OSI/ISO model of data communication, those two components relate to the data link layer and physical layer inside this model. A number of standards are available for Ethernet bus technology. In case of 10Gbit Ethernet, it is referred to the IEEE802.3ae standard.

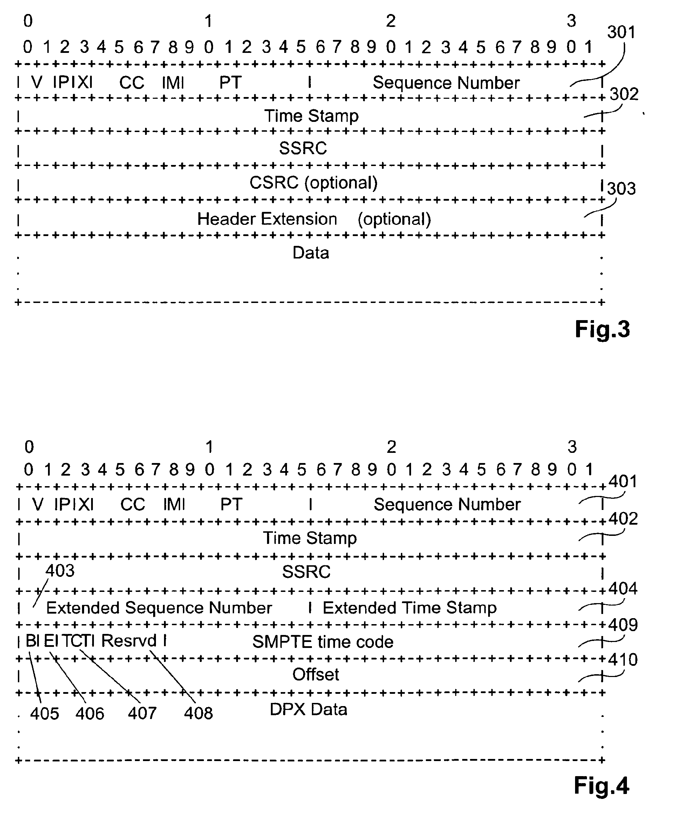

Fig. 3 shows the general format of a RTP packet header. Three entries are marked with a dedicated reference number. One is the sequence number in a corresponding 16 bit field 301 and the other is a time stamp in a 32bit field 302. The sequence number increments by 1 for each RTP data packet sent, and may be used by the receiver to detect packet losses and to restore the packet sequence. The initial value of the sequence number should be random (unpredictable) to make known plaintext-attacks on encryption more difficult, even if the source itself does not use encryption, because the packets may flow through a translator that does.

The time stamp reflects the sampling instant of the first Byte in the RTP data packet. The sample instant is derived from a clock that increments monotonically and linearly in time to allow synchronization in jitter calculations. If RTP packets are generated periodically, the nominal sampling instant as determined by the sampling clock is to be used, not a reading of the system clock. The sequence number provides for recognizing lost packets.

An optional header extension field is marked with reference number 303. Further information about the RTP header and the RTP protocol are available from Request For Comment RFC3550, in which the RTP protocol has been standardized. The entries in the RTP packet will also be explained in further detail with reference to Fig. 4.

The DPX file format is ideal to transport video data over a connection in streaming mode. The DPX header contains all necessary data to reconstruct the files with their original file names and all important video relevant metadata to process the received video. So it makes sense to transmit the DPX-files which represent a video frame per file as it is.

Fig. 4 shows a proposal how DPX files can be transported in RTP packet/s. The standard RTP header is followed by a 12-Byte payload header that extends the RTP sequence number with 2 Bytes, and the time stamp with 2 Bytes. A further 1 Byte field includes flags followed by a 3 Byte SMPTE time stamp and a 4 Byte offset. The DPX payload data follows the header data and shall be 32-bit aligned.

The fields of the fixed RTP header have their usual meaning, with the following additional notes:
Payload Type (PT): 7 bits
This field is a dynamically allocated payload type field that designates the payload as DPX video.

### Timestamp: 32 bits

For progressive scan video, the timestamp in field 402 denotes the sampling instant of the frame to which the RTP packet belongs. Packets must not include data from multiple frames, and all packets belonging to the same frame must have the same timestamp.

A 90-kHz timestamp should be used. If higher accuracy is needed, the Extended Time Stamp RTP header extension field 404 together with the time code type (TCT) field 407 may/shall be used. A 27-MHz timestamp could be used alternatively. This is an important frequency used for video encoding.

### Marker bit (M): 1 bit

If progressive scan video is being transmitted, the marker bit denotes the end of a DPX frame. The marker bit must be set to 1 for the last packet of the video frame/field. It must be set to 0 for other packets.

### Sequence Number: 16 bits

The low-order bits for RTP sequence number are in field 401. The standard 16-bit sequence number is augmented with another 16 bits in field 403 of the header extension in order to avoid problems due to wrap-around when operating at high data rates.

### Extended Sequence Number: 16 bits

In field 403 the high order bits of the extended 32-bit sequence number, are located in network byte order.

### Extended Time Stamp: 16 bits

Field 404 carries the high order bits of the extended 32-bit time stamp number, in network byte order.

### DPX Frame Begin Identification (B): 1 bit

The entry in field 405 identifies the beginning of a DPX frame. It is set to 1 if the beginning of a DPX frame follows the header data, and set to 0 otherwise.

### DPX Frame End Identification (E): 1 bit

The entry in field 407 identifies the end of a DPX frame. It is set to 1 if the last Bytes of the following payload are the last Bytes of the DPX frame. It is set to 1 if the RTP payload contains the end of a DPX frame and set to 0 otherwise.

### Time Code Type (TCT): 2 bit

The entry in this field 407 identifies the type of the used time code. Up to 4 different time codes can be addressed. The possible values are depicted in table 1.

**Table 1: Video RTP Extended Time Code Type Values**

| TCT value | Clock |
|---|---|
| 00 | 90 kHz |
| 01 | 27 MHz |
| 10 | 10GbE clock |
| 11 | Rsrvd |

### Reserved bits (Resrvd): 4 bit

The bits of field 408 are reserved for future use.

### SMPTE Time Code 24 bit

In field 409 is an SMPTE time code. The time code values of RTP packets of one DPX frame are equal. This eases the determination of the presentation time of the encapsulated DPX frame and avoids parsing into the DPX header.

### Offset: 32 bit

The offset field 410 identifies the offset of following payload data relative to the first Byte of the current DPX frame.

### Fragmentation:

DPX frames shall be fragmented so that the resulting RTP packet is smaller than the path MTU. MTU stands for maximum transmission unit that can be used on that path without fragmentation.

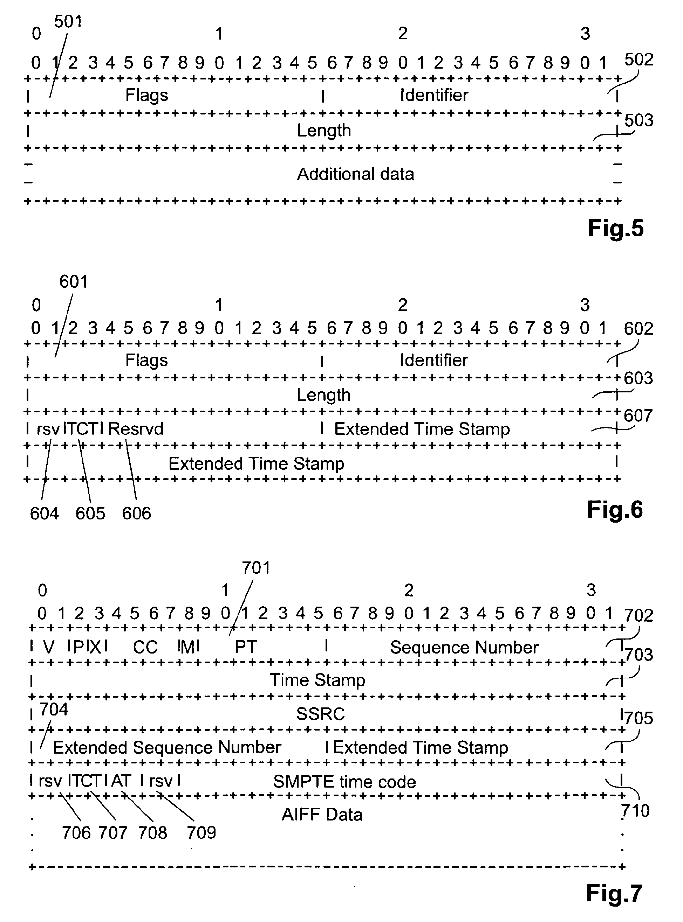

Fig. 5 shows an optional extension that describes how associated audio and metadata may be transmitted together with video inside DPX frames. This specification proposes to use specified field 76 to cover associated audio and additional metadata information. To get fast access to the different components of field 76 an identifier/length header format is introduced.

### Flags: 16 bit

A 2 Byte field 501 contains flags that are reserved for future use.

### Identifier: 16 bit

A 2 Byte field 502 identifies the type of the extended data. Some of the possible entries are defined in table 2 below.

**Table 2: Extended Data Type Values**

| Identifier | Value |
|---|---|
| Associated Audio Track 0 | 0×0000 |
| Associated Audio Track 1 | 0×0001 |
| Associated Audio Track 31 | 0×001F |
| Additional Metadata Type 0×TT | 0×80TT |
| High resolution time stamp (extended time stamp) | 0×8020 |

It is assumed, that audio is transmitted with sample rates up to 192 kHz and up to 32 bit words. The amount of 1 Megabyte may be divided between audio data and additional metadata. Each additional data type shall be aligned to 32-bit boundaries.

### Length: 32 bit

In field 503 the length in Bytes of the current additional data block is identified.

The additional metadata field (DPX field 76) may also be used to transmit a high resolution time stamp value. It is the same time stamp value which is located in the RTP header. This has the advantage that the information is still available and bound to the DPX frame after the RTP packet has been decoded in the receiver. This version of a metadata field is shown in Fig. 6. The different fields in this extension format are defined below:

### Flags: 16 bit

2 Bytes field 601 is reserved for flags.

### Identifier: 16 bit

2 Bytes field 602 is reserved for an additional data identifier, carrying the entry 0×8020 for indicating a high resolution timer.

### Length: 32 bit

The 4 Byte field 603 indicates the length of the current additional data block in Bytes.

### Rsv: 2 bits

Field 604 is reserved for future use.

### Time Code Type (TCT): 2 bit

Field 605 identifies the type of the used time code. Up to 4 different time codes can be addressed (see Table 1 for definition of types).

### Reserved bits (Resrvd): 4 bit

Field 606 is reserved for future use.

### Extended Time Stamp: 48 bit

Field 607 contains a 48 bit high resolution time stamp value.

If the optional encapsulation of audio data is not feasible, audio data shall be transmitted as an own RTP stream. The encapsulation of audio data shall be done with the AIFF format.

Fig. 7 shows the RTP packet format according the invention for transporting audio data in a separate stream. The standard RTP header is followed by an 8-Byte payload header that extends the RTP sequence number with 2 Bytes, the time stamp with 2 Bytes and a 1 Byte reserved field for flags followed by a 3 Byte SMPTE time stamp. The audio payload data, in AIFF format (audio interchange file format) or BWAV format (broadcast wave format) follows the header data and shall be 32-bit aligned.

The fields of the fixed RTP header have their usual meaning, with the following additional notes:

### Payload Type (PT): 7 bits

This is a dynamically allocated payload type field 701 that designates the payload as AIFF audio.

### Timestamp: 32 bits

The packets must not include data from multiple AIFF chunks, and all packets belonging to the same frame must have the same timestamp. The field is referenced with number 703.

A 90-kHz timestamp should be used. If higher accuracy is needed, the Extended Time Stamp RTP header extension field 705 together with the time code type (TCT) field 707 may/shall be used. A 27-MHz timestamp could be used alternatively. This is an important frequency used for video encoding.

### Sequence Number: 16 bits

The field 702 includes the low-order bits for an RTP sequence number. The standard 16-bit sequence number is augmented with another 16 bits in the payload header field 704 in order to avoid problems due to wrap-around when operating at high data rates.

The payload header is in the header extension of the RTP packet. The fields of the header extension have the following meanings:

### Extended Sequence Number: 16 bits

This field 704 includes the high order bits of the extended 32-bit sequence number, in network byte order.

### Extended Time Stamp: 16 bits

This field 705 includes the high order bits of the extended 32-bit time stamp, in network byte order.

### Reserved bits (Rsv): 2 bit

The bits in this field 706 are reserved for future use.

### Time Code Type (TCT): 2 bit

This field 707 includes an identifier for the type of the used time code. Up to 4 different time codes can be addressed. See Table 1 for the definition of types.

### Audio Type (AT): 2 bit

The bits of this field 708 identify the type of the used audio format. Up to 4 different audio formats can be addressed.

**Table 3 Audio Types**

| AT value | Clock |
|---|---|
| 00 | AIFF |
| 01 | BWF |
| 10 | PCM |
| 11 | Rsrvd |

### Reserved bits (Resrvd): 2 bit

The field 709 is reserved for future use.

### SMPTE Time Code 24 bit

The field 710 includes the SMPTE time code, see above.

AIFF or BWF data shall be fragmented so that the resulting RTP packet is smaller than the path MTU. Because AIFF and BWF are file formats with header data which appears only once per file the following adoption to the streaming behaviour shall / may be used.

The audio data associated to one (DPX) video frame shall be encapsulated in a valid AIFF (FORM chunk) or BWF sequence.

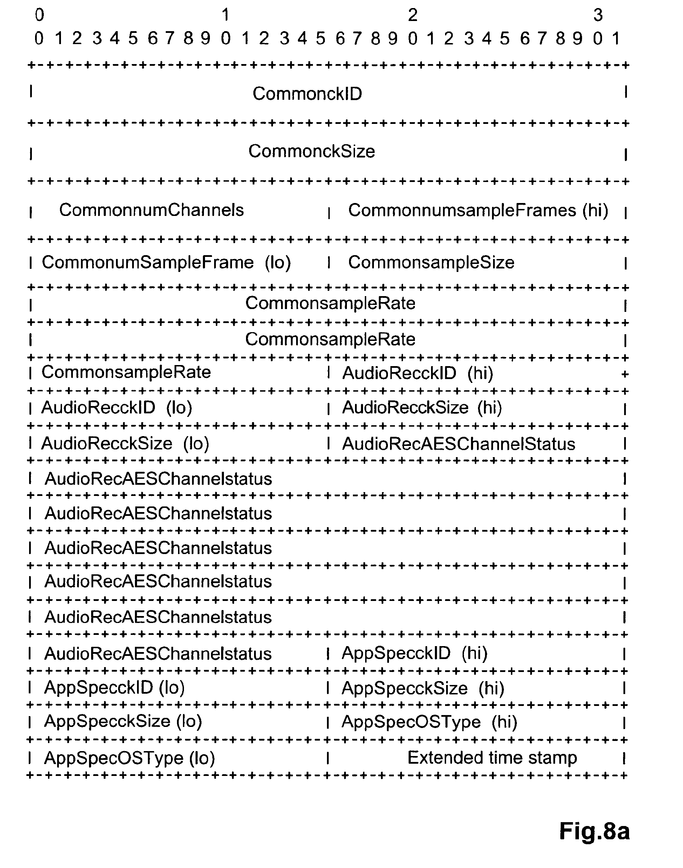

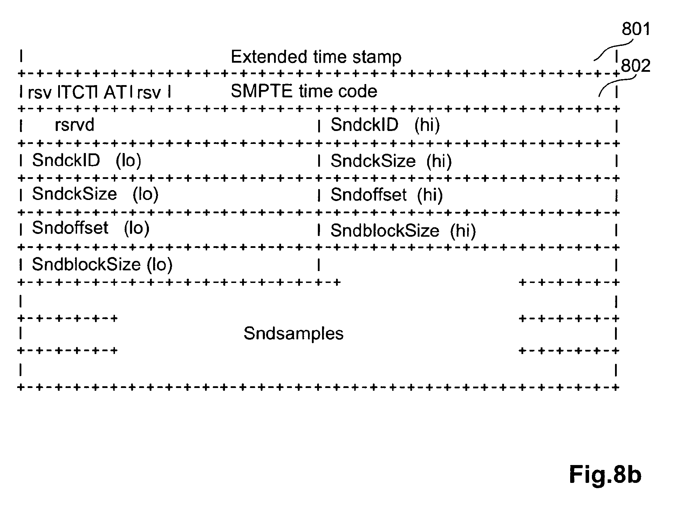

Fig. 8 shows the format of a valid AIFF form chunk. The chunk contains AES data. The format is not explained in detail. For this purpose it is referred to the AIFF standard described in the document: Audio Interchange File Format "AIFF" 'A Standard for Sampled Sound Files', Version 1.3, Apple Computer, Inc., 1989.

As shown in Fig. 8, the extended timestamp and SMPTE time code is repeated in each chunk, see field 801 and field 802.

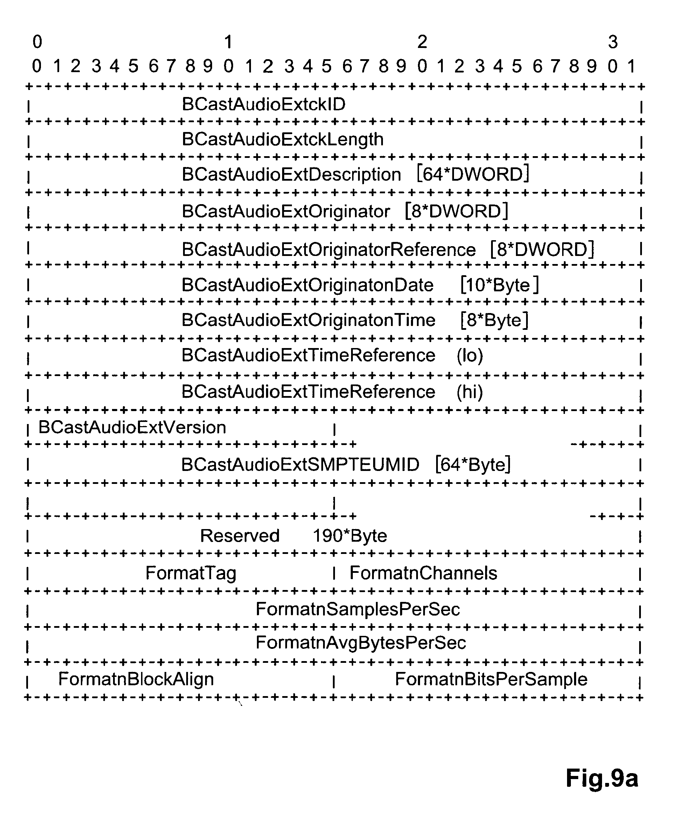

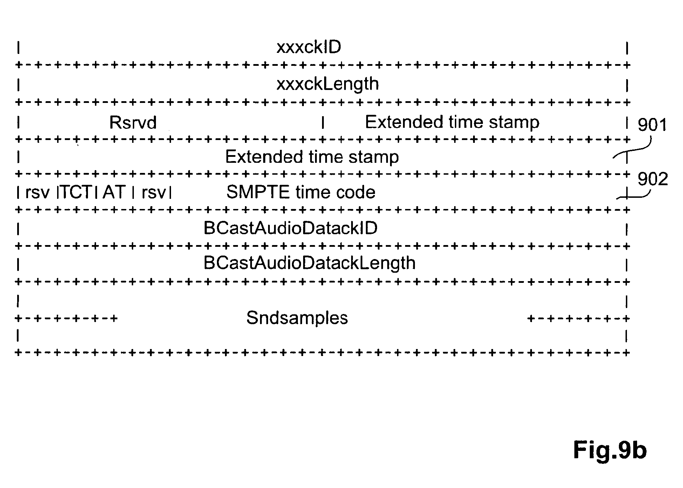

Fig. 9 shows the format of a BWF WAVE format chunk. The format is not explained in detail. For this purpose it is referred to the document 'A format for audio data files in broadcasting.' available under the link:
(http://www.ebu.ch/CMSimages/en/tec_text_n22-1997_tcm6-4645.pdf).

As shown in Fig. 9, the extended timestamp and SMPTE time code is repeated in each chunk, see field 901 and field 902.

The above specification, examples and drawings provide a complete description of the manufacture and use of the composition of the invention. Since many embodiments of the invention can be made without departing from the spirit and scope of the invention, the invention resides in the claims herein after appended.

## Claims

1. Method for transferring high resolution audio/video data in a high speed Internet protocol network, wherein the real time transport protocol is used, **characterized in that**, a header extension is added to the RTP packet header for audio/video streaming and the header extension concerns a payload header that extends the standard RTP sequence number in one field (403) and the standard RTP time stamp in another field (404).

2. Method according to claim 1, wherein the header extension concerns a real-time time stamp field (409), in which the real-time time stamp can be inserted in particular in the form of an SMPTE time code.

3. Method according to one of claims 1 or 2, wherein the video format is based on the digital moving picture exchange file format DPX, and wherein DPX formatted data is encapsulated in an RTP packet for video streaming.

4. Method according to one of claims 1 to 3, wherein the header extension includes a control field (405 to 408) with a number of flags, indicating one or more of the following items:
• DPX frame begin identification
• DPX frame and identification
• Time code type.

5. Method according to one of claims 1 to 4, wherein the header extension concerns an offset field (410) identifying where the first payload data of the DPX frame is found in the RTP packet.

6. Method according to one of the claims 1 to 5, wherein associated audio data or metadata is also transferred in a DPX frame.

7. Method according to claim 6, wherein a header format with an identifier field (502) and a length field (503) is used for getting faster access to the associated audio data or metadata.

8. Method according to claim 7 or 8, wherein the specified field 76 of a DPX frame is used for inserting associated audio or video data into the DPX frame.

9. Apparatus being adapted to perform the method according to one of the claims 1 to 8.

10. Data transport container for transferring audio/video data in a high speed Internet protocol network, wherein the data transport container is in the form of a valid real time transport protocol packet, **characterized in that** a header extension is added to the RTP packet header for audio/video streaming, wherein the header extension concerns a payload header that extends the standard RTP sequence number and the standard RTP time stamp.

11. Data transport container according to claim 10, wherein the header extension concerns a real-time timestamp (402) in particular in the form of an SMPTE time code.

12. Data transport container according to claim 10 or 11, wherein the audio/video data inserted in the RTP packet is in the format of a digital moving picture exchange file DPX.

13. Data transport container according to one of claims 10 to 12, wherein the header extension includes a control field (405 to 408) with a number of flags indicating one or more of the following items:
• DPX frame begin identification
• DPX frame and identification
• Time code type.

14. Data transport container according to one of claims 10 to 13, wherein the header extension also concerns an offset (410) identifying where the first payload data is found in the RTP packet.

15. Data transport container according to one of claims 10 to 14, wherein associated audio data or metadata is transferred embedded in a DPX frame carrying video data.

16. Data transport container according to one of claims 10 to 15, wherein a header format with an identifier field (502) and a length field (503) is used for getting faster access to the associated audio data or metadata.

17. Data transport container according to one of claims 10 to 16, wherein specified field 76 of a DPX frame is used for inserting associated audio and metadata into the DPX frame.
